(19)

Europäisches
Patentamt
European
Patent Office
Office européen
des brevets

(11)  EP 2 699 043 B1

(12)  **EUROPEAN PATENT SPECIFICATION**

(45) Date of publication and mention
of the grant of the patent:
**16.12.2015  Bulletin 2015/51**

(21) Application number: **12865910.9**

(22) Date of filing: **11.09.2012**

(51) Int Cl.:
*H04W 52/02* (2009.01)     *H04W 36/30* (2009.01)

(86) International application number:
**PCT/CN2012/081227**

(87) International publication number:
**WO 2013/107185 (25.07.2013 Gazette 2013/30)**

(54)  **MODEM AND NETWORK SEARCHING METHOD THEREOF**

MODEM UND NETZWERKSUCHVERFAHREN DAFÜR

MODEM ET PROCÉDÉ DE RECHERCHE DE RÉSEAU ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **21.01.2012  CN 201210019865**

(43) Date of publication of application:
**19.02.2014  Bulletin 2014/08**

(73) Proprietor: **Huawei Device Co., Ltd.
Shenzhen, Guangdong 518129 (CN)**

(72) Inventors:
 • **DENG, Yu
   Shenzhen
   Guangdong 518129 (CN)**
 • **WEI, Konggang
   Shenzhen
   Guangdong 518129 (CN)**

(74) Representative: **Kreuz, Georg Maria et al
Huawei Technologies Duesseldorf GmbH
Riesstrasse 8
80992 München (DE)**

(56) References cited:
**CN-A- 102 056 211     CN-A- 102 056 211
CN-A- 102 098 715     CN-A- 102 547 941
US-A- 4 556 760       US-A1- 2010 240 371
US-B1- 8 089 939**

• **"3rd Generation Partnership Project; Technical
Specification Group Radio Access Network; User
Equipment (UE) procedures in idle mode and
procedures for cell reselection in connected
mode (Release 10)", 3GPP STANDARD; 3GPP TS
25.304, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG2, no. V10.3.0, 20 December 2011 (2011-12-20),
pages 1-52, XP050554936, [retrieved on
2011-12-20]**

EP 2 699 043 B1

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

### FIELD OF THE INVENTION

The present invention relates to the field of mobile communications technologies, and in particular, to a modem and a network search method of the modem.

### BACKGROUND OF THE INVENTION

A modem (Modem) is a conversion interface that may enable digital data to be transmitted on an analog signal transmission line. A mobile communication Modem is a part of a mobile communication device such as a mobile phone and a data card. A mobile communication Modem device is a device that includes a mobile communication Modem, such as a mobile phone, a mobile broadband data card, and a pad (pad) with a 3G communication function.

Conventionally, a mobile communication Modem or a mobile communication Modem device is capable of searching for a network in a standby state, and network search strategies are an S criterion and an R criterion. The S criterion is used to control a start strategy, whereas the R criterion is used to filter a neighboring cell, so as to switch from a serving cell to a filtered neighboring cell. In the S criterion, the signal quality and signal power of a current serving cell where the mobile communication Modem or the mobile communication Modem device camps on need to be detected, a signal quality factor and a signal power factor of the serving cell are obtained, and filtering is started when either of the two reaches a threshold value. The R criterion may be adopted in the filtering, and in the R criterion, a selected neighboring cell is determined according to measured signal quality values of a plurality of neighboring cells. To obtain a neighboring cell through reselection immediately when a signal of a serving cell becomes weak, related operations such as signal quality measurement and signal power measurement need to be performed on a serving cell and a neighboring cell at the same time. A serving cell refers to a cell with which a mobile communication Modem or a mobile communication Modem device establishes a connection, and user information is sent from the cell. Neighboring cells refer to two cells with overlapped coverage and between which a switching relationship is set, and one cell may have a plurality of neighboring cells. Network search is to search for a network according to the wireless signal strength and quality of a mobile communication network.

However, in the existing S criterion, a data source is an instantaneous value of a network signal, and momentary signal weakening caused by network signal fluctuation do not affect normal standby of a mobile communication Modem or a mobile communication Modem device, but affects a calculation result of the S criterion. After the calculation result reaches a threshold value, network search measurement is started, and during the network search measurement, search for a neighboring cell needs to be performed, and much electricity is wasted during the search for a neighboring cell. Especially, in the case of many neighboring cells, a workload of a mobile communication Modem or a mobile communication Modem device is greatly increased.

CN102056211, published on May 11, 2011, disclosed a method for triggering neighbor measurement, which includes the following steps: adding the received signal quality threshold (RSQT) of a serving cell to measurement control information which is sent to a terminal by the serving cell; measuring the reference signal received power (RSRP) and the reference signal received quality (RSRQ) of the serving cell by the terminal; and beginning to measure the neighbor cell by the terminal when the obtained RSRP of the serving cell is less than received signal strength (RSS) or the obtained RSRQ of the serving cell is less than the RSQT of the serving cell.

### SUMMARY OF THE INVENTION

The present invention provides a modem and a network search method of the modem, so as to reduce power consumption and a workload.

The present invention provides a network search method of a modem, including:

sampling a signal level value and a signal quality value of a serving cell;
obtaining a signal power condition according to the signal level value, and obtaining a signal stability condition according to the signal quality value; and when both the signal power condition and the signal stability condition are higher than set conditions, determining a network search state as an off state;
obtaining a signal level change condition according to the signal level value;
determining, according to the signal level change condition, whether the signal strength of the serving cell decreases monotonically; and
when it is determined, according to the signal level change condition, that the signal strength of the serving cell decreases monotonically, determining the network search state as a start state

The present invention provides a modem, including:

a sampling unit, configured to sample a signal level value and a signal quality value of a serving cell;
a data storage and operation unit, configured to obtain a signal power condition according to the signal level value, and obtain a signal stability condition according to the signal quality value; and
a determining unit, configured to, when both the signal power condition and the signal stability condition are higher than set conditions, determine a network search state as an off state;
the data storage and operation unit is further configured to obtain a signal level change condition according to the signal level value; and
the determining unit is further configured to determine, according to the signal level change condition, whether the signal strength of the serving cell decreases monotonically, and when it is determined, according to the signal level change condition, that the signal strength of the serving cell decreases monotonically, determine the network search state as a start state.

As a summary of the present invention, a signal of a serving cell is sampled, a signal power condition is obtained according to a sampled signal level value, a signal stability condition is obtained according to a signal quality value, and when both the signal power condition and the signal stability condition are higher than set conditions, namely, when the signal strength and the stability of the serving cell are better, network search is turned off, so that unnecessary network search may be avoided, thereby reducing power consumption and a workload.

## BRIEF DESCRIPTION OF THE DRAWINGS

To describe the technical solutions of the present invention more clearly, the accompanying drawings of preferred embodiments are introduced briefly in the following. Apparently, the accompanying drawings in the following description show some embodiments of the present invention only.

FIG. 1 is a schematic flow chart of a network search method of a modem according to an embodiment of the present invention;
FIG. 2 is a schematic diagram of a modem according to the present invention;
FIG. 3 is a schematic flow chart of a network search method of a modem according to another embodiment of the present invention;
FIG. 4 is a schematic diagram of storing sampled data according to the present invention;
FIG. 5 is a schematic flow chart of a network search method of a modem according to another embodiment of the present invention;
FIG. 6 is a schematic structural diagram of a modem according to an embodiment of the present invention; and
FIG. 7 is a schematic diagram of simulation comparison between the prior art and the present invention.

## DETAILED DESCRIPTION OF THE EMBODIMENTS

To make the objectives, technical solutions, and advantages of the present invention more comprehensible, the technical solutions in preferred embodiments of the present invention are described in the following clearly and completely with reference to the accompanying drawings in the embodiments of the present invention. Apparently, the embodiments to be described are merely a part rather than all of the embodiments of the present invention.

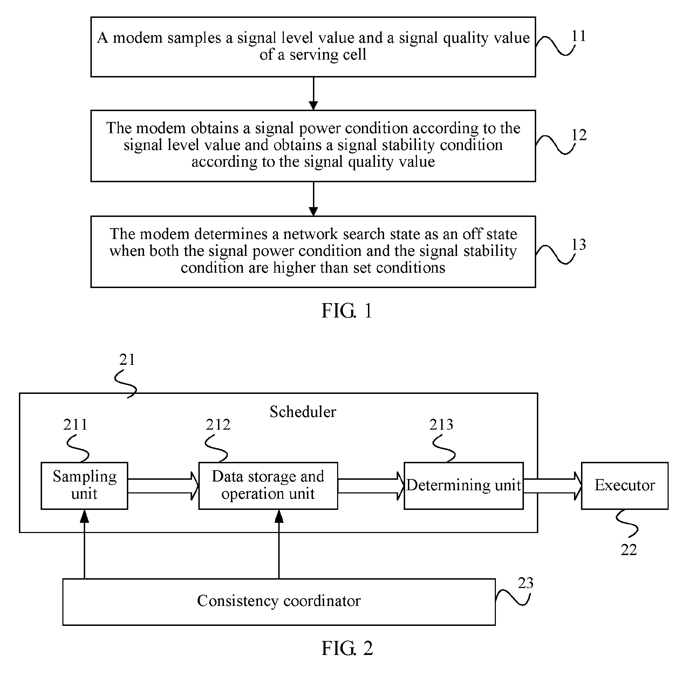

FIG. 1 is a schematic flow chart of a network search method of a modem according to an embodiment of the present invention, where the method includes:

Step 11: A modem samples a signal level value and a signal quality value of a serving cell.

In this embodiment of the present invention, a modem refers to a mobile communication Modem or a mobile communication Modem device.

A signal level value is used to indicate the strength of a received signal, and is represented by $rx_n$ in this embodiment of the present invention; and a signal quality value is used to indicate the quality of a received signal, that is, purity, and is represented by $q_n$ in this embodiment of the present invention. When a signal level value of a certain received signal is large but includes many noises, its signal quality value may also be small.

Step 12: The modem obtains a signal power condition according to the signal level value and obtains a signal stability condition according to the signal quality value.

A mean value of signal level values may be used as a signal power condition and a variance of signal quality values may be used as a signal stability condition.

Step 13: The modem determines a network search state as an off state when both the signal power condition and the signal stability condition are higher than set conditions.

A first threshold value and a second threshold value may be set, respectively. When a value of the signal power condition is higher than the set first threshold value and a value of the signal stability condition is also higher than the set second threshold value, a network search state is determined as an off state, and then a network search algorithm is turned off, namely, an S algorithm and an R algorithm are turned off.

In this embodiment, a signal of a serving cell is sampled, a signal power condition is obtained according to a sampled signal level value and a signal stability condition is obtained according to a signal quality value. When a value of the signal power condition is higher than a set value, it may indicate that the signal strength of a serving cell satisfies a set requirement, and therefore, when a value of the signal stability condition is higher than a set value, it may indicate that the signal strength of the serving cell is better; and when the value of the signal power condition is higher than the set value, it may indicate that the stability of the serving cell satisfies a set requirement, and therefore, when the value of the signal stability condition is higher than the set value, it may indicate that the signal stability of the serving cell is better. In this embodiment, when the signal strength and the stability of the serving cell are better, namely, when both the value of the signal power condition and the value of the signal stability condition are higher than the set values, network search is turned off, so that unnecessary network search may be avoided, thereby reducing power consumption and a workload.

This embodiment of the present invention may specifically be implemented by adopting a principle of an inference engine. Inference refers to a process of deducing a conclusion from known facts according to a certain rule. The knowledge-based inference is implemented in a computer, mainly includes two aspects: inference and control, and is formed by a scheduler 21, an executor 22, and a consistency coordinator 23. Specifically, referring to FIG. 2, in this embodiment of the present invention, the scheduler 21 may include a sampling unit 211, a data storage and operation unit 212, and a determining unit 213. The sampling unit 211 is configured to sample a signal level value and a signal quality value of a serving cell; the data storage and opertaion unit 212 is configured to obtain a signal power condition and a signal stability condition according to the signal level value and the signal quality value. The determining unit 213 is configured to, when both the signal power condition and the signal stability condition are higher than set conditions, determine a network search state as an off state. The executor is configured to, when the network search state is an off state, turn off an S algorithm and an R algorithm, and when network search is started, start the S algorithm and the R algorithm to perform network search. The executor may be configured to execute a specific S algorithm and a specific R algorithm. The consistency coordinator is configured to correct operating parameters of the executor and the scheduler, for example, correct a sampling period of the sampling unit in the scheduler, the size of data storage space, and feedback on a result of the executor (correct the foregoing parameters).

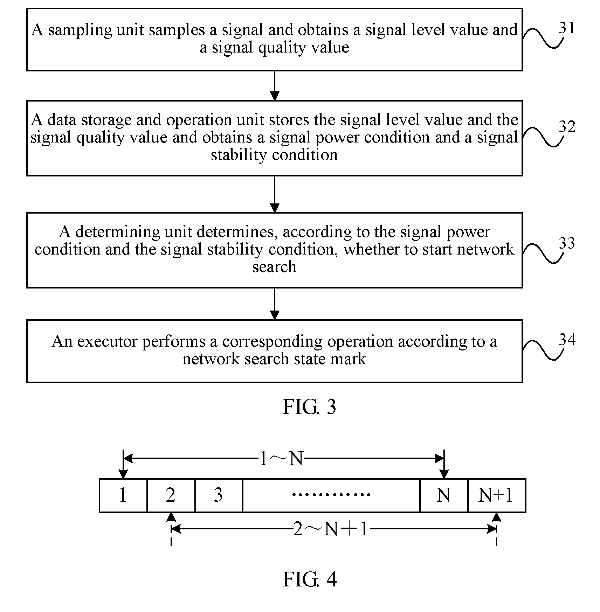

FIG. 3 is a schematic flow chart of a network search method of a modem according to another embodiment of the present invention, where the method includes:

Step 31: A sampling unit samples a signal and obtains a signal level value and a signal quality value.
Step 32: A data storage and operation unit stores the signal level value and the signal quality value and obtains a signal power condition and a signal stability condition.

In this embodiment, data may be stored and updated in a sliding window manner. As shown in FIG. 4, it is assumed that an adopted window is N, so that N pieces of data numbered as 1 to N from old to new are stored in a data buffer according to a sampling history. When an $(N+1)^{th}$ piece of data arrives, a first oldest piece of data is deleted, so that in storage space in a system, data is always the newest.

It is assumed that a level value of an $N^{th}$ newest signal is $rx_n$, where n=1, ..., N, and a quality value of the $N^{th}$ newest signal is $q_n$, n=1, ..., N. A signal power condition and a signal stability condition may be obtained through calculation by adopting the following formulas:

The signal power condition is represented by $R_{avg}$:

$$R_{avg} = \frac{\sum_{n=1}^{N} rx_n}{N};$$

and
the signal stability condition is represented by $Q_{var}$:

$$Q_{\text{var}} = \frac{\sum_{n=1}^{N} \left| q_n - Q_{avg} \right|}{N}, \text{ where, } Q_{avg} = \frac{\sum_{n=1}^{N} q_n}{N}.$$

Step 33: A determining unit determines, according to the signal power condition and the signal stability condition, whether to start network search.

If the signal power condition is higher than a set first threshold value and the signal stability condition is higher than a set second threshold value, turn off network search. Specific values of the first threshold value and the second threshold value may be set according to a practical situation. After the determining unit determines that the network search is turned off, a network search state mark may be set to "forbid", and otherwise, an original value keeps unchanged.

Step 34: An executor performs a corresponding operation according to the network search state mark.

For example, when the network search state mark is "forbid", the executor turns off an S algorithm and an R algorithm, so as to avoid unnecessary network search, measurement and cell reselection. In addition, when the network search state mark is "start", the S algorithm and the R algorithm are executed, and network search may be performed.

In this embodiment, according to historical data, namely, a signal quality value and a signal level value, a network state of a serving cell is inferred, so as to further prevent network search from starting due to an accidental factor and reduce unnecessary cell reselection.

Further, when large-scale disturbance occurs in a network or a user is in a moving state and is about to leave a current serving cell, a network search algorithm needs to be rapidly started.

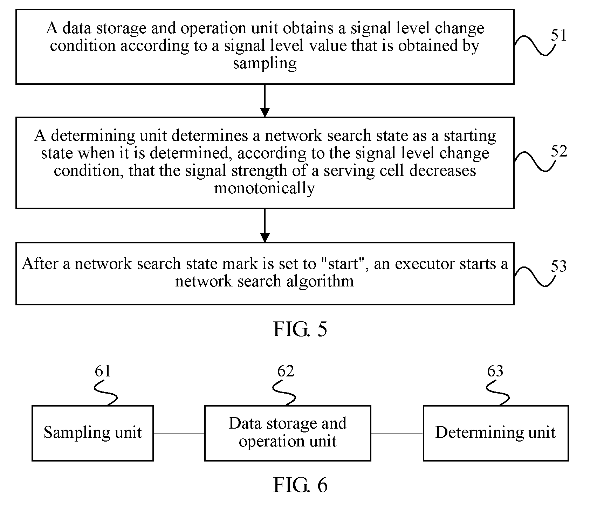

FIG. 5 is a schematic flow chart of a network search method of a modem according to another embodiment of the present invention, where the method includes:

Step 51: A data storage and operation unit obtains a signal level change condition according to a signal level value that is obtained by sampling.

The signal level change condition may be represented by $Rx_n'$, and a calculation formula is:

$$Rx_n' = \frac{drx_{n+1}}{dt_{n+1}} = \frac{rx_{n+1} - rx_n}{\Delta t}.$$

Step 52: A determining unit determines a network search state as a starting state when it is determined, according to the signal level change condition, that the signal strength of a serving cell decreases monotonically.

There are N signal level values in storage space, and therefore, (N-1) signal level change conditions may be obtained according to the foregoing calculation formula. If a large part, for example, 70% of these (N-1) signal level change conditions are smaller than 0, that is, it indicates that the signal quality of the serving cell is in a monotonic decrease trend, a network search state mark is set to "start".

Step 53: After the network search state mark is set to "start", an executor starts a network search algorithm.

After it is determined that the network search state mark is "start", the executor may start an S algorithm and an R algorithm immediately, and perform network search and measurement by using the S algorithm and perform reselection by using the R algorithm.

Specifically, an S criterion is used to control a start policy, and its algorithm is as follows:

$$\text{Squal} = \text{Qqualmeas} - \text{Qqualmin} \quad (1)$$

$$\text{Srelev} = \text{Qrxlevmeas} - \text{Qrxlevmin} - \text{Pcompensation} \quad (2)$$

where:

Squal: signal quality factor;
Srelev: signal power factor;
Qqualmeas: measured signal quality value;
Qrxlevmeas: measured signal reception power consumption value;
Qqualmin: minimum receivable signal quality; and

Qrxlevmin: minimum receivable power value.

Pcompensation: max (UE TXPWR MAX RACH - P_MAX, 0), UE_TXPWR_MAX_RACH is permitted maximum transmission power when a Modem or a Modem device performs random access, which is sent by a system broadcast message and generally set to 0; and P_MAX is maximum nominal transmission power of the Modem or the Modem device, and the larger of differences between the two and 0 is selected.

The signal quality factor Squal is obtained through calculation according to formula (1), the signal power factor Srelev is obtained through calculation according to formula (2), and when either value of the two reaches an intra-frequency, inter-frequency, or inter-system measurement threshold, the Modem or the Modem device starts network search measurement in a corresponding range, and then filter measurement results by adopting an R criterion. An algorithm of the R criterion is as follows:

$$Rs = Qmeas\_s + Qhysts \qquad (3)$$

$$Rn = Qmeas\_n - Qoffsets\_n \qquad (4)$$

where:

Rs: signal quality factor of a current serving cell;
Rn: signal quality factor of an $n^{th}$ neighboring cell;
Qmeas_s: measured signal quality value of the serving cell;
Qmeas_n: measured signal quality value of the $n^{th}$ neighboring cell;
Qhysts: reselection hysteresis of the serving cell; and
Qoffsets_n: signal quality offset of the $n^{th}$ neighboring cell.

The Modem or the Modem device calculates values of Rs and Rn according to formulas (3) and (4), and when Rs<Rn maintains over a certain period of time, starts cell reselection, and re-selects a certain neighboring cell n from a serving cell s.

In this embodiment, after it is determined that the strength of a serving cell decreases, a network search algorithm may be started in time, and cell reselection may be implemented in time.

FIG. 6 is a schematic structural diagram of a modem according to an embodiment of the present invention, where the modem includes a sampling unit 61, a data storage and operation unit 62, and a determining unit 63. The sampling unit 61 is configured to sample a signal level value and a signal quality value of a serving cell. The data storage and operation unit 62 is configured to obtain a signal power condition according to the signal level value, and obtain a signal stability condition according to the signal quality value. The determining unit 63 is configured to, when both the signal power condition and the signal stability condition are higher than set conditions, determine a network search state as an off state.

Optionally, the data storage and operation unit is further configured to obtain a signal level change condition according to the signal level value. The determining unit is further configured to determine, according to the signal level change condition, whether the signal strength of the serving cell decreases monotonically, and when it is determined, according to the signal level change condition, that the signal strength of the serving cell decreases monotonically, determine a network search state as a start state.

Optionally, the data storage and operation unit is specifically configured to:

obtain the signal power condition through calculation according to the following formula:

$$R_{avg} = \frac{\sum_{n=1}^{N} rx_n}{N},$$

where $R_{avg}$ is a value of the signal power condition, $rx_n$ is the signal level value, and n=1, ..., N, where N is the number of signal level values.

Optionally, the data storage and operation unit is specifically configured to:

obtain the signal stability condition through calculation according to the following formula:

$$Q_{\mathrm{var}} = \frac{\sum_{n=1}^{N} \left| q_n - Q_{avg} \right|}{N},$$

where, $Q_{avg} = \dfrac{\sum_{n=1}^{N} q_n}{N}$ .

Qvar is a value of the signal stability condition, qn is the signal quality value, and n=1, ..., N, and N is the number of signal quality values.

Optionally, the data storage and operation unit is specifically configured to:

obtain the signal level change condition through calculation according to the following formula:

$$Rx_n^{'} = \frac{rx_{n+1} - rx_n}{\Delta t},$$

where $Rx_n^{'}$ is a value of the signal level change condition, $rx_n$ and $rx_{n+1}$ are signal level values that are obtained after sampling is performed consecutively twice, and $\Delta t$ is a sampling time interval.

Optionally, the determining unit is specifically configured to, when the number of values of the signal level change condition, which are smaller than 0, is greater than a set threshold value, determine that the signal strength of the serving cell decreases monotonically.

In this embodiment, a signal of a serving cell is sampled, a signal power condition is obtained according to a sampled signal level value, a signal stability condition is obtained according to a signal quality value, and when both the signal power condition and the signal stability condition are higher than set conditions, namely, when the signal strength and the stability of the serving cell are better, network search is turned off, so that unnecessary network search may be avoided, thereby reducing power consumption and a workload.

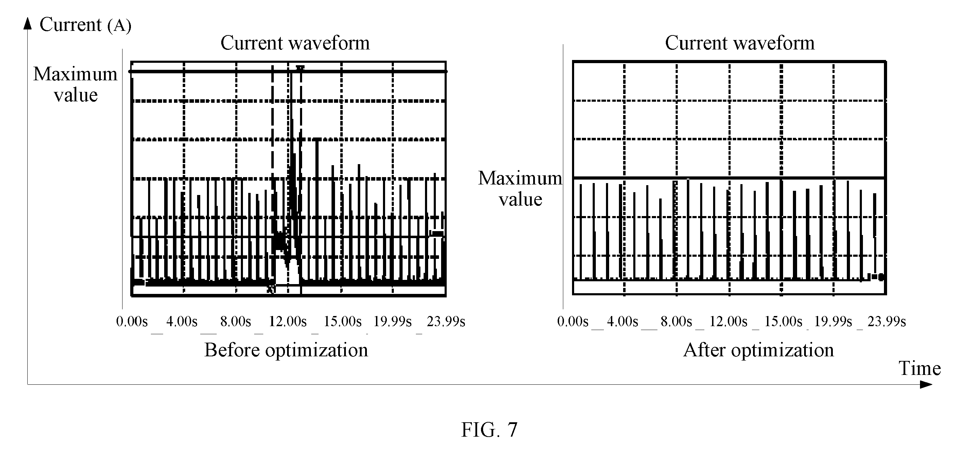

According to the foregoing embodiments, in the present invention, standby power consumption may be reduced, and for a specific simulation diagram, reference may be made to FIG. 7. The "before optimization" in FIG. 7 indicates a power consumption condition in the prior art, and the "after optimization" indicates a power consumption condition in the embodiment of the present invention. It can be seen from FIG. 7 that a maximum value of a current in a solution after optimization is smaller than that in a solution before optimization, and the number of pulses is apparently decreased and power consumption is reduced in the solution after optimization.

Persons of ordinary skill in the art may understand that all or part of the steps of the foregoing method embodiments may be implemented by a program instructing relevant hardware. The program may be stored in a computer readable storage medium. When the program is run, the steps of the foregoing method embodiments are performed. The storage medium may be any medium that is capable of storing program codes, such as a ROM, a RAM, a magnetic disk, or an optical disk. Finally, it should be noted that the foregoing embodiments are merely intended for describing the technical solutions of the present invention rather than limiting the present invention.

**Claims**

1. A network search method of a modem, comprising:

     sampling (11) a signal level value and a signal quality value of a serving cell;
     obtaining (12) a signal power condition according to the signal level value, and obtaining a signal stability condition according to the signal quality value;
     when both the signal power condition and the signal stability condition are higher than set conditions, determining (13) a network search state as an off state; **characterized in that** the method further comprises:

obtaining (51) a signal level change condition according to the signal level value;
determining (52), according to the signal level change condition, whether the signal strength of the serving cell decreases monotonically; and
when it is determined, according to the signal level change condition, that the signal strength of the serving cell decreases monotonically, determining the network search state as a start state.

2. The method according to claim 1, wherein the step of obtaining (12) a signal power condition according to the signal level value comprises:

obtaining the signal power condition through calculation according to the following formula:

$$R_{avg} = \frac{\sum_{n=1}^{N} rx_n}{N},$$

wherein Ravg is a value of the signal power condition, $rx_n$ is the signal level value, and n=1, ..., N, and N is the number of signal level values.

3. The method according to claim 1, wherein the step of obtaining (32) a signal stability condition according to the signal quality value comprises:

obtaining the signal stability condition through calculation according to the following formula:

$$Q_{var} = \frac{\sum_{n=1}^{N} |q_n - Q_{avg}|}{N},$$

wherein $$Q_{avg} = \frac{\sum_{n=1}^{N} q_n}{N},$$

Qvar is a value of the signal stability condition, qn is the signal quality value, and n=1, ..., N, and N is the number of signal quality values.

4. The method according to claim 1, wherein a calculation formula for obtaining a signal level change condition according to the signal level value is:

$$Rx_n' = \frac{rx_{n+1} - rx_n}{\Delta t},$$

wherein $Rx_n'$ is a value of the signal level change condition, $rx_n$ and $rx_{n+1}$ are signal level values that are obtained after sampling is performed consecutively twice, and $\Delta t$ is a sampling time interval.

5. The method according to claim 4, wherein the step of determining, according to the signal level change condition, whether the signal strength of the serving cell decreases monotonically comprises:

if the number of values of the signal level change condition, which are smaller than 0, is greater than a set threshold value, determining that the signal strength of the serving cell decreases monotonically.

6. A modem, comprising:

a sampling unit (211), configured to sample a signal level value and a signal quality value of a serving cell;
a data storage and operation unit (212), configured to obtain a signal power condition according to the signal level value, and obtain a signal stability condition according to the signal quality value;
a determining unit (213), configured to, when both the signal power condition and the signal stability condition are higher than set conditions, determine a network search state as an off state; **characterized in that**:
the data storage and operation unit (212) is further configured to obtain a signal level change condition according to the signal level value; and
the determining unit (213) is further configured to determine, according to the signal level change condition, whether the signal strength of the serving cell decreases monotonically, and when it is determined, according to the signal level change condition, that the signal strength of the serving cell decreases monotonically, determine the network search state as a start state.

7. The modem according to claim 6, wherein the data storage and operation unit (212) is specifically configured to:

obtain the signal power condition through calculation according to the following formula:

$$R_{avg} = \frac{\sum_{n=1}^{N} rx_n}{N} \text{,}$$

wherein Ravg is a value of the signal power condition, $rx_n$ is the signal level value, and n=1, ..., N, and N is the number of signal level values.

8. The modem according to claim 6, wherein the data storage and operation unit (212) is specifically configured to:

obtain the signal stability condition through calculation according to the following formula:

$$Q_{var} = \frac{\sum_{n=1}^{N} |q_n - Q_{avg}|}{N} \text{,}$$

wherein, $Q_{avg} = \frac{\sum_{n=1}^{N} q_n}{N}$ and

Qvar is a value of the signal stability condition, qn is the signal quality value, and n=1, ..., N, and N is the number of signal quality values.

9. The modem according to claim 6, wherein the data storage and operation unit (212) is specifically configured to:

obtain the signal level change condition through calculation according to the following formula:

$$Rx_n^{'} = \frac{rx_{n+1} - rx_n}{\Delta t} \text{,}$$

wherein $Rx_n^{'}$ is a value of the signal level change condition, $rx_n$ and $rx_{n+1}$ are signal level values that are obtained after sampling is performed consecutively twice, and $\Delta t$ is a sampling time interval.

**10.** The modem according to claim 9, wherein
the determining unit (213) is specifically configured to, when the number of values of the signal level change condition, which are smaller than 0, is greater than a set threshold value, determine that the signal strength of the serving cell decreases monotonically.

**Patentansprüche**

**1.** Netzsuchverfahren eines Modems, wobei das Verfahren Folgendes umfasst:

Abtasten (11) eines Signalpegelwertes und eines Signalqualitätswertes einer dienenden Zelle;
Erhalten (12) einer Signalleistungsbedingung gemäß dem Signalpegelwert und Erhalten einer Signalstabilitätsbedingung gemäß dem Signalqualitätswert;
wenn sowohl die Signalleistungsbedingung als auch die Signalstabilitätsbedingung höher als festgelegte Bedingungen sind, Bestimmen (13) eines Netzsuchzustands als einen Ausschaltzustand; **dadurch gekennzeichnet, dass** das Verfahren ferner Folgendes umfasst:

Erhalten (51) einer Signalpegeländerungsbedingung gemäß dem Signalpegelwert;
Bestimmen (52) gemäß der Signalpegeländerungsbedingung, ob die Signalstärke der dienenden Zelle monoton abnimmt; und
wenn gemäß der Signalpegeländerungsbedingung bestimmt wird, dass die Signalstärke der dienenden Zelle monoton abnimmt, Bestimmen des Netzsuchzustands als einen Startzustand.

**2.** Verfahren nach Anspruch 1, wobei der Schritt des Erhaltens (12) einer Signalleistungsbedingung gemäß dem Signalpegelwert Folgendes umfasst:

Erhalten der Signalleistungsbedingung durch Berechnung gemäß der folgenden Formel:

$$R_{avg} = \frac{\sum_{n=1}^{N} rx_n}{N},$$

wobei Ravg ein Wert der Signalleistungsbedingung ist, $rx_n$ der Signalpegelwert ist und n = 1, ..., N gilt, wobei N die Anzahl der Signalpegelwerte ist.

**3.** Verfahren nach Anspruch 1, wobei der Schritt des Erhaltens (32) einer Signalstabilitätsbedingung gemäß dem Signalqualitätswert Folgendes umfasst:

Erhalten der Signalstabilitätsbedingung durch Berechnung gemäß der folgenden Formel:

$$Q_{var} = \frac{\sum_{n=1}^{N} |q_n - Q_{avg}|}{N},$$

wobei $Q_{avg} = \frac{\sum_{n=1}^{N} q_n}{N}$ gilt,

Qvar ein Wert der Signalstabilitätsbedingung ist, qn der Signalqualitätswert ist und n = 1, ..., N gilt, wobei N die Anzahl der Signalqualitätswerte ist.

**4.** Verfahren nach Anspruch 1, wobei eine Berechnungsformel zum Erhalten einer Signalpegeländerungsbedingung gemäß dem Signalpegelwert die Folgende ist:

$$Rx_n' = \frac{rx_{n+1} - rx_n}{\Delta t},$$

wobei $Rx_n'$ ein Wert der Signalpegeländerungsbedingung ist, $rx_n$ und $rx_{n+1}$ Signalpegelwerte sind, die erhalten werden, nachdem das Abtasten zweimal nacheinander ausgeführt worden ist, und $\Delta t$ ein Abtastzeitintervall ist.

5. Verfahren nach Anspruch 4, wobei der Schritt des Bestimmens gemäß der Signalpegeländerungsbedingung, ob die Signalstärke der dienenden Zelle monoton abnimmt, Folgendes umfasst:

falls die Anzahl der Werte der Signalpegeländerungsbedingung, die kleiner als 0 sind, größer als ein festgelegter Schwellenwert ist, Bestimmen, dass die Signalstärke der dienenden Zelle monoton abnimmt.

6. Modem, das Folgendes umfasst:

eine Abtasteinheit (211), die konfiguriert ist, einen Signalpegelwert und einen Signalqualitätswert einer dienenden Zelle abzutasten;
eine Datenspeicher- und Operationseinheit (212), die konfiguriert ist, eine Signalleistungsbedingung gemäß dem Signalpegelwert zu erhalten und eine Signalstabilitätsbedingung gemäß dem Signalqualitätswert zu erhalten;
eine Bestimmungseinheit (213), die konfiguriert ist, wenn sowohl die Signalleistungsbedingung als auch die Signalstabilitätsbedingung höher als festgelegte Bedingungen sind, einen Netzsuchzustand als einen Ausschaltzustand zu bestimmen; **dadurch gekennzeichnet, dass**:

die Datenspeicher- und Operationseinheit (212) ferner konfiguriert ist, eine Signalpegeländerungsbedingung gemäß dem Signalpegelwert zu erhalten; und
die Bestimmungseinheit (213) ferner konfiguriert ist, gemäß der Signalpegeländerungsbedingung zu bestimmen, ob die Signalstärke der dienenden Zelle monoton abnimmt, und, wenn gemäß der Signalpegeländerungsbedingung bestimmt wird, dass die Signalstärke der dienenden Zelle monoton abnimmt, den Netzsuchzustand als einen Startzustand zu bestimmen.

7. Modem nach Anspruch 6, wobei die Datenspeicher- und Operationseinheit (212) spezifisch konfiguriert ist:

die Signalleistungsbedingung durch Berechnung gemäß der folgenden Formel zu erhalten:

$$R_{avg} = \frac{\sum_{n=1}^{N} rx_n}{N},$$

wobei Ravg ein Wert der Signalleistungsbedingung ist, $rx_n$ der Signalpegelwert ist und n = 1, ..., N gilt, wobei N die Anzahl der Signalpegelwerte ist.

8. Modem nach Anspruch 6, wobei die Datenspeicher- und Operationseinheit (212) spezifisch konfiguriert ist:

die Signalstabilitätsbedingung durch Berechnung gemäß der folgenden Formel zu erhalten:

$$Q_{var} = \frac{\sum_{n=1}^{N} \left| q_n - Q_{avg} \right|}{N},$$

wobei $Q_{avg} = \dfrac{\sum\limits_{n=1}^{N} q_n}{N}$ gilt, und

Qvar ein Wert der Signalstabilitätsbedingung ist, qn der Signalqualitätswert ist und n = 1, ..., N gilt, wobei N die Anzahl der Signalqualitätswerte ist.

9. Modem nach Anspruch 6, wobei die Datenspeicher- und Operationseinheit (212) spezifisch konfiguriert ist:

die Signalpegeländerungsbedingung durch Berechnung gemäß der folgenden Formel zu erhalten:

$Rx_n^{'} = \dfrac{rx_{n+1} - rx_n}{\Delta t}$ , wobei $Rx_n^{'}$ ein Wert der Signalpegeländerungsbedingung ist, rx$_n$ und rx$_{n+1}$ Signalpegelwerte sind, die erhalten werden, nachdem das Abtasten zweimal nacheinander ausgeführt worden ist, und $\Delta t$ ein Abtastzeitintervall ist.

10. Modem nach Anspruch 9, wobei
die Bestimmungseinheit (213) spezifisch konfiguriert ist, wenn die Anzahl der Werte der Signalpegeländerungsbedingung, die kleiner als 0 sind, größer als ein festgelegter Schwellenwert ist, zu bestimmen, dass die Signalstärke der dienenden Zelle monoton abnimmt.


**Revendications**

1. Procédé de recherche de réseau d'un modem, comprenant les étapes suivantes :

échantillonner (11) une valeur de niveau du signal et une valeur de qualité du signal d'une cellule de desserte ;
obtenir (12) une condition de puissance du signal selon la valeur de niveau du signal, et obtenir une condition de stabilité du signal selon la valeur de qualité du signal ;
lorsque la condition de puissance du signal ainsi que la condition de stabilité du signal sont supérieures à des conditions définies, déterminer (13) un état de recherche de réseau comme un état désactivé ; **caractérisé en ce que** le procédé comprend en outre :

obtenir (51) une condition de changement de niveau du signal selon la valeur de niveau du signal ;
déterminer (52), selon la condition de changement de niveau du signal, si l'intensité du signal de la cellule de desserte est décroissante de façon monotone ; et
lorsqu'il est déterminé, selon la condition de changement de niveau du signal, que l'intensité du signal de la cellule de desserte est décroissante de façon monotone, déterminer l'état de recherche de réseau comme un état de début.

2. Procédé selon la revendication 1, dans lequel l'étape consistant à obtenir (12) une condition de puissance du signal selon la valeur de niveau du signal comprend :

obtenir la condition de puissance du signal par l'intermédiaire d'un calcul selon la formule suivante :

$$R_{avg} = \dfrac{\sum\limits_{n=1}^{N} rx_n}{N} ,$$

Ravg étant une valeur de la condition de puissance du signal, rx$_n$ étant la valeur de niveau du signal, et n=1, ..., N, et N étant le nombre de valeurs de niveau du signal.

3. Procédé selon la revendication 1, dans lequel l'étape consistant à obtenir (32) une condition de stabilité du signal selon la valeur de qualité du signal comprend :

obtenir la condition de stabilité du signal par l'intermédiaire d'un calcul selon la formule suivante :

$$Q_{\mathrm{var}} = \frac{\sum\limits_{n=1}^{N} \left| q_n - Q_{avg} \right|}{N},$$

où $Q_{avg} = \dfrac{\sum\limits_{n=1}^{N} q_n}{N}$,

Qvar étant une valeur de la condition de stabilité du signal, qn étant la valeur de qualité du signal, et n=1, ..., N, et N étant le nombre de valeurs de qualité du signal.

4. Procédé selon la revendication 1, dans lequel une formule de calcul permettant d'obtenir une condition de changement de niveau du signal selon la valeur de niveau du signal est :

$$Rx_n^{'} = \frac{rx_{n+1} - rx_n}{\Delta t},$$

où $Rx_n$ est une valeur de la condition de changement de niveau du signal, $rx_n$ et $rx_{n+1}$ sont des valeurs de niveau du signal qui sont obtenues après qu'un échantillonnage a été exécuté deux fois consécutivement, et $\Delta t$ est un intervalle de temps d'échantillonnage.

5. Procédé selon la revendication 4, dans lequel l'étape consistant à déterminer, selon la condition de changement de niveau du signal, si l'intensité du signal de la cellule de desserte est décroissante de façon monotone comprend :

si le nombre de valeurs de la condition de changement de niveau du signal, qui sont inférieures à 0, est supérieur à une valeur de seuil définie, déterminer que l'intensité du signal de la cellule de desserte est décroissante de façon monotone.

6. Modem, comprenant :

une unité d'échantillonnage (211), configurée pour échantillonner une valeur de niveau du signal et une valeur de qualité du signal d'une cellule de desserte ;
une unité de commande et de stockage de données (212), configurée pour obtenir une condition de puissance du signal selon la valeur de niveau du signal, et pour obtenir une condition de stabilité du signal selon la valeur de qualité du signal ;
une unité de détermination (213), configurée pour déterminer, lorsque la condition de puissance du signal ainsi que la condition de stabilité du signal sont supérieures à des conditions définies, un état de recherche de réseau comme un état désactivé ; **caractérisé en ce que** :

l'unité de commande et de stockage de données (212) est en outre configurée pour obtenir une condition de changement de niveau du signal selon la valeur de niveau du signal ; et
l'unité de détermination (213) est en outre configurée pour déterminer, selon la condition de changement de niveau du signal, si l'intensité du signal de la cellule de desserte est décroissante de façon monotone, et lorsqu'il est déterminé, selon la condition de changement de niveau du signal, que l'intensité du signal de la cellule de desserte est décroissante de façon monotone, déterminer l'état de recherche de réseau comme un état de début.

7. Modem selon la revendication 6, dans lequel l'unité de commande et de stockage de données (212) est configurée spécifiquement pour :

obtenir la condition de puissance du signal par l'intermédiaire d'un calcul selon la formule suivante :

$$R_{avg} = \frac{\sum_{n=1}^{N} rx_n}{N},$$

où Ravg est une valeur de la condition de puissance du signal, $rx_n$ est la valeur de niveau du signal, et n=1, ..., N, et N est le nombre de valeurs de niveau du signal.

**8.** Modem selon la revendication 6, dans lequel l'unité de commande et de stockage de données (212) est configurée spécifiquement pour :

obtenir la condition de stabilité du signal par l'intermédiaire d'un calcul selon la formule suivante :

$$Q_{var} = \frac{\sum_{n=1}^{N} |q_n - Q_{avg}|}{N},$$

où $Q_{avg} = \dfrac{\sum_{n=1}^{N} q_n}{N}$ et

Qvar étant une valeur de la condition de stabilité du signal, qn étant la valeur de qualité du signal, et n=1, ..., N, et N étant le nombre de valeurs de qualité du signal.

**9.** Modem selon la revendication 6, dans lequel l'unité de commande et de stockage de données (212) est configurée spécifiquement pour :

obtenir la condition de changement de niveau du signal par l'intermédiaire d'un calcul selon la formule suivante :

$$Rx_n' = \frac{rx_{n+1} - rx_n}{\Delta t},$$

où $Rx_n$ est une valeur de la condition de changement de niveau du signal, $rx_n$ et $rx_{n+1}$ sont des valeurs de niveau du signal qui sont obtenues après qu'un échantillonnage a été exécuté deux fois consécutivement, et $\Delta t$ est un intervalle de temps d'échantillonnage.

**10.** Modem selon la revendication 9, dans lequel :

l'unité de détermination (213) est configurée spécifiquement pour déterminer, lorsque le nombre de valeurs de la condition de changement de niveau du signal, qui sont inférieures à 0, est supérieur à une valeur de seuil définie, que l'intensité du signal de la cellule de desserte est décroissante de façon monotone.

A modem samples a signal level value and a signal quality value of a serving cell ~11

The modem obtains a signal power condition according to the signal level value and obtains a signal stability condition according to the signal quality value ~12

The modem determines a network search state as an off state when both the signal power condition and the signal stability condition are higher than set conditions ~13

FIG. 1

21

Scheduler

211

212

213

Sampling unit → Data storage and operation unit → Determining unit → Executor

22

Consistency coordinator 23

FIG. 2

A sampling unit samples a signal and obtains a signal level value and a signal quality value $\sim$ 31

A data storage and operation unit stores the signal level value and the signal quality value and obtains a signal power condition and a signal stability condition $\sim$ 32

A determining unit determines, according to the signal power condition and the signal stability condition, whether to start network search $\sim$ 33

An executor performs a corresponding operation according to a network search state mark $\sim$ 34

FIG. 3

| 1 | 2 | 3 | ············ | N | N+1 |

←————1~N————→

←————2~N+1————→

FIG. 4

A data storage and operation unit obtains a signal level change condition according to a signal level value that is obtained by sampling    51

A determining unit determines a network search state as a starting state when it is determined, according to the signal level change condition, that the signal strength of a serving cell decreases monotonically    52

After a network search state mark is set to "start", an executor starts a network search algorithm    53

FIG. 5

61    62    63

| Sampling unit | Data storage and operation unit | Determining unit |

FIG. 6

FIG. 7

EP 2 699 043 B1

**EP 2 699 043 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102056211